# EUROPEAN PATENT SPECIFICATION

(11) **EP 1 809 701 B1**
(45) Date of publication and mention of the grant of the patent: **05.08.2009**
(21) Application number: 05809997.9
(22) Date of filing: 20.10.2005
(51) Int. Cl.: C08L 63/02, C08L 63/04, C08L 83/06

(54) **MOLDABLE COMPOSITIONS CONTAINING CARBINOL FUNCTIONAL SILICONE REISINS OR ANHYDRIDE FUNCTIONAL SILICONE RESINS**
CARBINOLFUNKTIONELLE SILIKONHARZE ODER ANHYDRIDFUNKTIONELLE SILIKONHARZE ENTHALTENDE FORMMASSEN
COMPOSITIONS MOULABLES CONTENANT DES RESINES DE SILICONE A FONCTIONNALITE CARBINOL OU ANHYDRIDE

(30) Priority: 25.10.2004 US 621780 P
(43) Date of publication of application: 25.07.2007
(73) Proprietor: Dow Corning Corporation, Midland MI 48686-0994 (US)
(72) Inventor: GORDON, Glenn, Viaplana, Midland, MI 48642 (US); SCHMIDT, Randall, Gene, Midland, MI 48642 (US); WIEBER, Gary, Michael, Midland, MI 48642 (US)
(74) Representative: Gillard, Richard Edward
(86) International application number: PCT/US2005/037963
(87) International publication number: WO 2006/047318

(56) References cited:
- US-A- 5 015 700
- US-A- 5 814 679
- US-A- 5 939 491

## Description

### CROSS-REFERENCE TO RELATED APPLICATIONS

This application claims priority to U.S. Patent Application No. 60/621,780 as filed October 25, 2004.

### DESCRIPTION

This invention relates to thermal curable compositions containing a glycidyl ether epoxide resin or its hydrogenated forms, a carbinol functional silicone resin, and optionally, a thermal catalyst. These compositions can be prepared as one-part systems that are in a solid form near the gel point, with all of the components present, to form fully cured compositions once heat is applied. When heat is applied, the compositions exhibit some flow and then cure. As such, the compositions can be delivered in a variety of forms, such as pellets or transfer films, for ease of use in molding operations or thin film adhesive applications.

Epoxy silicones in combination with carbinol functional silicone resins are known in the art. For example, US Patent 5,814,679 (September 29, 1998) discloses blends of photo-curable compositions containing epoxy functionalized silicones and long chain non-resinous silicones containing carbinol functionality. The '679 patent indicates that the long chain non-resinous carbinol containing silicones copolymerize or co-cure with the epoxy functionalized silicones thereby permitting the formulation of premium release photo-curable silicone compositions.

Some types of silicone resins in combination with epoxy resins are known in the art. For example, US Patent 5,135,993 (August 4, 1992) describes a blend of (A) a curable epoxy resin, and (B) an amino functional silicone resin containing units such as (i) PhSiO_{3/2}, (ii) R₂SiO, and (iii) an aminofunctional siloxy unit such as (a) H₂NRⁱSiO_{3/2}, (b) R^{iv}HNRⁱⁱSiO_{3/2}, (c) (R^{iv}HNRⁱⁱ)_{3-y}(R^{v})_{y}SiO_{1/2}, and (d) (H₂NRⁱⁱ)₃₋ₓ(R^{v})ₓSiO_{1/2}. US 5,015,700 discloses thermally curable compositions comprising epoxide resins and anhydride-functional organo(poly)siloxanes. US 5,814,679 discloses photo-curable compositions comprising carbinol functionalized silicones and epoxy functionalized silicones. Preferably, the ratio of carbinol groups to epoxide groups is 0.5 to 1.2.

Further, this invention relates to a moldable composition containing: (a) 100 parts by weight of a glycidyl ether epoxide resin that is free of silicon atoms; and (b) 50-300 parts by weight of a carbinol functional silicone resin containing the units:

(R¹₃SiO_{1/2})ₐ

(R²₂SiO_{2/2})_{b}

(R³SiO_{3/2})_{c}

and

(SiO_{4/2})_{d}.

In the formulae, R¹ and R² are each independently a hydrogen atom, an alkyl group having 1-8 carbon atoms, an aryl group, a carbinol group free of aryl groups having at least 3 carbon atoms, or an aryl-containing carbinol group having at least 6 carbon atoms. R³ is an alkyl group having 1-8 carbon atoms or an aryl group, a has a value of less than or equal to 0.5, b has a value of less than or equal to 0.3, c has a value of 0.3-0.8, d has a value of less than 0.5, and the value of a + b + c + d = 1.

There is on average at least one carbinol group per carbinol functional silicone resin molecule. Preferably, the R¹+R²+R³ groups in the carbinol functional silicone resin component (b) contain a high enough content of phenyl to provide the appropriate compatibility of component (b) with component (a). Preferably, greater than 10 percent by weight of the R¹+R²R³ groups are phenyl groups, more preferably, greater than 25 percent by weight. Thermal curable compositions containing the glycidyl ether epoxide resin, and the carbinol functional silicone resin, may also contain (c) 0-10 parts by weight, preferably 0.010-10 parts by weight, more preferably 0.1-5 parts by weight, of a thermal catalyst, and (d) 0-200 parts by weight, preferably 0.1 - 200 parts by weight, more preferably 50 - 150 parts by weight of an organic polyol.

### THE GLYCIDYL ETHER EPOXDE RESIN

Component (a), the glycidyl ether epoxide resins used herein, are resins that are free of silicon atoms. Such resins are known compositions, and arc shown, for example, in US Patent 4,977,199 (December 11, 1990). In Columns 9-10 of the '199 patent, numerous resinous suitable compositions are described in detail.
US Patent 6,579,914 (June 17, 2003) in Columns 4 and 5, and US Patent 6,646,102 (November 11, 2003) in Columns 24-27, both describe numerous additional resinous compositions that are suitable for use herein.

Generally, these resins comprise diglycidyl ethers of bisphenol A that are derived from reacting bisphenol A with epichlorohydrin; glycidyl ethers of bisphenol A that are derived from reacting bisphenol A with an alcohol such as n-butyl alcohol and epichlorohydrin; aryl glycidyl ether epoxide resins; polynuclear phenol glycidyl ether epoxide resins; aryl glycidyl ether epoxide resins; di-nuclear aryl glycidyl ether epoxide resins; multi-nuclear aryl glycidyl ether epoxide resins; cresol-novolac glycidyl ether epoxide resins; and phenol-novolac glycidyl ether epoxide resins and hydrogenated forms of the aryl containing epoxies.

Some representative examples of suitable glycidyl ether epoxide resins that can be used include 2-methylphenol glycidyl ether; 4-methylphenol glycidyl ether; 4-methoxyphenol glycidyl ether; 2,6-dimethylphenol glycidyl ether; 2,6-diisopropylphenol glycidyl ether; 2,6-dibromophenol glycidyl ether; 1,2-, 1,3- and 1,4-dihydroxybenzene diglycidyl ethers; 1,4-, 1,5- and 2,6-dihydroxynaphthalene diglycidyl ethers; 4,4'-(3,3',5,5'-tetramethyl)bisphenol A diglycidyl ether; 4,4'-(3, 3',5,5'-tetramethyl-2,2',6,6'-tetrabromo)bisphenol A diglycidyl ether; 4, 4'-(3,3',5,5'-tetramethyl)bisphenol F diglycidyl ether; 4,4'-(3,3'5,5'- tetramethyl)bisphenol diglycidyl ether; 4,4'-biphenol diglycidyl ether; 4, 4'-(3,3'5,5'-tetramethyl-2,2',6,6'-tetrabromo)bisphenol diglycidyl ether; 4,4'-bisphenol F diglycidyl ether; 4,4'-bisphenol sulfone diglycidyl ether; 4,4'-(3,3',5,5'-tetrabromo)bisphenol A diglycidyl ether; 4,4'-bisphenol A diglycidyl ether; 4,4'-bisphenol K diglycidyl ether; 9,9- bis(4-hydroxyphenyl)fluorine diglycidyl ether; 1,3-bis(4-hydroxyphenyl)adamantane diglycidyl ether; phenol-formaldehyde novolac glycidyl ether; o-cresol-formaldehyde novolac glycidyl ether; phenol-dicyclopentadienyl novolac glycidyl ether; naphthol-formaldehyde novolac glycidyl ether; tris-phenol methane tri-glycidyl ether; tris(3,5- dimethyl-4-hydroxyphenyl)methane tri-glycidyl ether; and 1,1,2,2-tetra-phenol ethane tetra-glycidyl ether.

One example of a preferred commercial product of the glycidyl ether epoxide resin that can be used herein is D.E.R.® 331 Epoxy Resin. It is a product of The Dow Chemical Company, Midland, Michigan. This composition is the reaction product of epichlorohydrin and bisphenol-A. It has an epoxy equivalent weight of 182-192 g/eq, an epoxide percentage of 22.4-23.6 percent, and a viscosity of 11,000-14,000 mPa•S. Another preferred commercial product is Eponex ® 1510 hydrogenated epoxy resin. It is a product of Resolution Performance Products Houston, Texas. Eponex® 1510 has an epoxy equivalent weight of 210-220 g/eq.

### THE CARBINOL FUNCTIONAL SILICONE RESIN

The carbinol functional silicone resin of component (b) contains the units:

(R¹₃SiO_{1/2})ₐ

(R²₂SiO_{2/2})_{b}

(R³SiO_{3/2})_{c}

and

(SiO_{4/2})_{d}.

In the formulae, R¹ and R² are each independently a hydrogen atom, an alkyl group having 1-8 carbon atoms, an aryl group, a carbinol group free of aryl groups having at least 3 carbon atoms, or an aryl-containing carbinol group having at least 6 carbon atoms. R³ is an alkyl group having 1-8 carbon atoms or an aryl group, a has a value of less than or equal to 0.5, b has a value of less than or equal to 0.3, c has a value of 0.3-0.8, d has a value of less than 0.5, and the value of a + b + c + d = 1. There is on average at least one carbinol group per carbinol functional silicone resin molecule. Preferably, the R¹+R²+R³ groups in the carbinol functional silicone resin component (b) contain a high enough content of phenyl to provide the appropriate compatibility of component (b) with component (a). Preferably, greater than 10 percent by weight of the R¹+R²+R³ groups are phenyl groups, more preferably, greater than 25 percent by weight.

As used herein, the phrase *carbinol group* is considered as being any group containing at least one carbon-bonded hydroxyl (COH) group. The carbinol group may contain more than one COH group, such as for example:

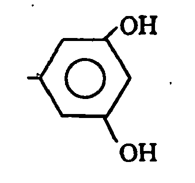

The alkyl groups in the carbinol functional silicone resin are illustrated by methyl, ethyl, propyl, butyl, pentyl, hexyl, and octyl, with the alkyl group typically being methyl. The aryl groups are illustrated by phenyl, naphthyl, benzyl, tolyl, xylyl, xenyl, methylphenyl, 2-phenylethyl, 2-phenyl-2-methylethyl, chlorophenyl, bromophenyl and fluorophenyl, with the aryl group typically being phenyl.

A carbinol group having at least 3 carbon atoms and being free of aryl groups is illustrated by the group R⁷OH, where R⁷ is a divalent hydrocarbon group having at least 3 carbon atoms, or a divalent hydrocarbonoxy group having at least 3 carbon atoms. R⁷ is illustrated by alkylene groups such as -(CH₂)ₘ- where m is 3-10, -CH₂CH(CH₃)-, -CH₂CH(CH₃)CH₂-, -CH₂CH₂CH(CH₂CH₃)CH₂CH₂CH₂-, and -OCH(CH₃)(CH₂)ₘ, where m is 1-10. The carbinol group having at least 3 carbon atoms and being free of aryl groups is also illustrated by the group R⁸(OH)CH₂OH, where R⁸ is the group -CH₂CH₂(CH₂)mOCH₂CH- where m is 1-10.

An aryl containing carbinol group having at least 6 carbon atoms is illustrated by R⁹OH, where R⁹ is an arylene group such as -(CH₂)ₙC₆H₄-, where n is 0-10, -CH₂CH(CH₃)(CH₂)ₙC₆H₄-, where n is 0-10, and -(CH₂)ₙC₆H₄(CH₂)ₙ-, where n is 1-10. The aryl-containing carbinol group typically has 6-14 atoms.

In the carbinol functional silicone resin according to the invention, a has a value of less than or equal to 0.5, preferably 0.2-0.4; b has a value of less than or equal to 0.3, preferably 0-0.2; c has a value of 0.3-0.8, preferably 0.4-0.8, d has a value of less than 0.5, preferably 0 - 0.1, and the value of a + b + c + d = 1. When each R² group is a methyl group, the value of b is preferably less than 0.1. Carbinol functional silicone resins according to the invention have on average at least one carbinol group per carbinol functional silicone resin molecule. Preferably, the equivalent weight of carbinol groups per carbinol functional silicone resin is 100-1,000, more preferably 200-800.

Some suitable carbinol functional silicone resins are represented by the following compositions:
I. A carbinol functional silicone resin containing the units:

   ((CH₃)₃SiO_{1/2})ₐ

   ((R²)CH₃SiO_{2/2})_{b} where R² is -(CH₂)₃C₆H₄OH

   ((C₆H₅)CH₃SiO_{2/2})_{b}

   and

   (C₆H₅SiO_{3/2})_{c},
II. A carbinol functional silicone resin containing the units:

   ((R¹)(CH₃)₂SiO_{1/2})ₐ where R¹ is -(CH₂)₃C₆H₄OH

   and

   (C₆H₅SiO_{3/2})_{c},
III. A carbinol functional silicone resin containing the units:

   ((R¹)(CH₃)₂SiO_{1/2})ₐ where R¹ is -(CH₂)₃OH

   and

   (C₆H₅SiO_{3/2})_{c},
IV. A carbinol functional silicone resin containing the units:

   ((R¹)(CH₃)₂SiO_{1/2})ₐ where R¹ is -(CH₂)₃OH

   (CH₃SiO_{3/2})_{c}

   and

   (C₆H₅SiO_{3/2})_{c},
V. A carbinol functional silicone resin containing the units:

   ((CH₃)₃SiO_{1/2})ₐ

   ((R²)CH₃SiO_{2/2})_{b} where R² is -(CH₂)₃OH

   ((C₆H₅)CH₃SiO_{2/2})_{b}

   and

   (C₆H₅SiO_{3/2})_{c},
VI. A carbinol functional silicone resin containing the units:

   ((CH₃)₃SiO_{1/2})ₐ

   ((R¹)(CH₃)₂SiO_{1/2})ₐ where R² is -(CH₂)₃OH

   and

   (C₆H₅SiO_{3/2})_{c},

   and
VII. A carbinol functional silicone resin containing the units:

   ((R¹)(CH₃)₂SiO_{1/2})ₐ where R² is -CH₂CH(CH₃)CH₂OH

   ((H)(CH₃)₂SiO_{1/2})ₐ

   and

   (C₆H₅SiO_{3/2})_{c}.

In formulae I-VII, a has a total value in the resin of 0.2-0.4, b has a total value in the resin of 0-0.3, and c has a total value in the resin of 0.3-0.8.

Carbinol functional silicone resins can be prepared by reacting:
(A) at least one hydrogen functional silicone resin containing units of the formulae:

   (R¹⁰₃SiO_{1/2})ₐ

   (R¹¹₂SiO_{2/2})_{b}

   (R³SiO_{3/2})_{c}

   and

   (SiO_{4/2})_{d}, with
(B) at least one vinyl terminated akohol; in the presence of
(C) a hydrosilylation catalyst; and optionally
(D) at least one solvent.

In the formulae, R¹⁰ and R¹¹ are each independently an alkyl group having 1-8 carbon atoms, an aryl group, or a hydrogen atom; R³ is an alkyl group having 1-8 carbon atoms or an aryl group; a is less than or equal to 0.6; b is less than or equal to 0.3, c is 0.3-0.8, d is less than 0.5; the sum of a + b + c + d = 1; and provided there are at least two silicon-bonded hydrogen atoms present in the silicone resin.

### THE THERMAL CATALYST

Optional component (c), the thermal catalyst, is illustrated by (i) aliphatic and aromatic tertiary amines such as dimethylpropylamine, pyridine, dimethylaminopyridine, dimethylbenzylamine, and dimethylaminomethyl phenol; (ii) amine salts; (iii) boron trifluoride complexes; (iv) amine borates; (v) latent catalysts such as boron trifluoride, monoethylamine, and dicyandiamide; and (vi) imidazoles such as 2-ethylimidazole, and 2-ethyl-4-methylimidazole available under the trademark IMICURE® EMI-2,4 from Air Products & Chemicals Incorporated, Allentown, Pennsylvania. Some examples of other useful thermal catalysts include (vii) Lewis acids and Lewis acid complexes including aluminum trichloride, aluminum tribromide, boron trifluoride, boron trichloride, antimony pentafluoride, titanium tetrafluoride, boron trifluoride and boron trichloride complexes such as BF₃, diethylamine, a BCl₃ amine complex available under the trademark OMICURE® BC- 120 from CVC Specialty Chemicals, Incorporated, Maple Shade, New Jersey; (viii) hydrazides such as aminodihydrazide; (ix) guanidines such as tetramethyl guanidine; and (x) dicyandiamide. While compositions containing components (a) and (b) can be cured without a catalyst, the inclusion of a catalyst hastens the cure. The thermal catalyst may be present in the composition in an amount from 0-10 parts by weight based on 100 parts by weight of the glycidyl ether epoxide resin. Preferably, the thermal catalyst may be used in an amount from 0.010-10 parts by weight, more preferably 0.1-5 parts by weight, on the same basis.

### THE ORGANIC POLYOL

The organic polyols, optional component (d), are known compositions that are also described in detail in the '199 patent in Columns 13-19. Some representative organic polyols include polyether polyols such as polyhydroxyalkanes and polyoxyalkylene polyols; the acrylic and vinyl polyols; the polyester polyols; the polycaprolactone polyols; and other lactone polyols such as polyvalerolactone polyols, and polymethylcaprolactone polyols.

Suitable polyether polyols include (a) alkylene oxide adducts of polyhydroxyalkanes; (b) alkylene oxide adducts of non-reducing sugars and sugar derivatives; (c) alkylene oxide adducts of phosphorous and polyphosphorous acids; (d) alkylene oxide adducts of polyphenols; and (e) polyols from natural oils such as castor oil.

The class of organic polyols most preferred for use in coating compositions according to the invention are polycaprolactone polyols, representative of which are a number of commercially available products sold under the trademark TONE™ from The Dow Chemical Company, Midland, Michigan. TONE™ 0305 Polyol was used in the examples. It is a low equivalent weight tri-functional liquid polyol for use in coating applications. Reference may be made to the '199 patent for the details of these and other suitable types of organic polyols. The organic polyol may be present in the composition in an amount from 0 to 200 parts by weight based on 100 parts by weight of the glycidyl ether epoxide resin. Preferably, the organic polyol may be used in an amount of about 0.1-200 parts by weight, based on 100 parts by weight of the glycidyl ether epoxide resin, more preferably 50 -150 parts by weight on the same basis.

### THE ORGANIC ANHYDRIDE

The organic anhydride, component (d), when present in the thermal curable composition, includes compounds such as maleic anhydride, succinic anhydride, hexahydrophthalic anhydride, tetrahydrophthalic anhydride, dodecylsuccinic anhydride, phthalic anhydride, nadic methyl anhydride, pyromellitic dianhydride, and mixtures thereof. An organic anhydride that is particularly useful in the invention is hexahydrophthalic anhydride that is available from the Buffalo Chemical Color Corporation, Buffalo, New York. These organic anhydrides may also be hydrolyzed to yield diacids derived therefrom, and while the diacids are not preferred, they can be useful for making thermal curable compositions according to the invention. The organic anhydride may be present in the composition in an amount from 0 to 200 parts by weight based on 100 parts by weight of the glycidyl ether epoxide resin, Preferably, the organic anhydride may be used in an amount of about 0.1-200 parts by weight, based on 100 parts by weight of the glycidyl ether epoxide resin, more preferably50 -150 parts by weight on the same basis.

### THE FILLER

The filler, optional component (e), when included in the composition, should be a filler that does not adversely affect the bonding characteristics of the thermal curable composition. Some representative examples of suitable fillers include metal carbonates such as calcium carbonate encompassing chalk, calcite, marl, travertine, marble, and limestone; calcium magnesium carbonate; sodium carbonate; magnesium carbonate; silica including amorphous silica, quartz, glass beads, glass bubbles, and glass fibers; silicates including talc, clays such as montmorillonite, feldspar, mica, calcium silicate, calcium metasilicate, sodium aluminosilicate, and sodium silicate; metal sulfates including calcium sulfate, barium sulfate, sodium sulfate, aluminum sodium sulfate, aluminum sulfate; gypsum; vermiculite; wood pulp; aluminum trihydrate; metal oxides including calcium oxide, lime, aluminum oxide, and titanium dioxide; and metal sulfites including calcium sulfite. Most preferred are silica fillers. When the filler is present, the thermal curable composition may include 0.1-80 parts by weight, based on 100 parts by weight of the glycidyl ether epoxide resin.

The compositions of the invention can be used to prepare one-part thin film adhesives and moldable pellets. The compositions can also be used to encapsulate electronic components by transfer molding involving melt processing followed by curing. The glycidyl ether epoxide resin adds toughness and adhesion, whereas the carbinol functional silicone resin and the anhydride functional silicone resin, add water resistance, weatherability, thermal stability, and flexibility, to coatings and adhesives. The coating compositions can be prepared and used in such applications by combining and mixing the components of the composition together, applying the composition to at least one surface of a substrate, and curing or allowing the composition to cure. The compositions can be prepared by simply mixing the appropriate ingredients together. Standard state of the art mixing and application techniques and equipment can be used in the preparation and use of the compositions. For example, an article can be adhered to a substrate by heating the article, applying the composition to at least one surface of the substrate, placing the heated article in contact with the composition, and curing the composition. Similarly, an article can be encapsulated by transfer molding the composition onto the article to be encapsulated, exposing the article to heat, and allowing or causing the composition to flow and cure.

### EXAMPLES

The following examples are set forth in order to illustrate the invention in more detail.

### Example A1 - Preparation of SiH Functional Silicone Resin Intermediate A

59.7 gram of phenyltrimethoxysilane and 204 gram of methyltrimethoxysilane were catalyzed by 0.19 gram of trifluoromethane sulfonic acid (TFMSA), and then hydrolyzed with 37.9 gram of deionized water. This was followed by distillation and removal of the by-product methanol. 88.7 gram of 1,1,3,3-tetramethyl-1,3-disiloxane (TMDS) and 39.6 gram of acetic acid were added. The mixture was heated to 50 °C for three hours. Methanol and methyl acetate were removed by distillation. 228.1 gram of toluene was added, and the mixture was washed with (i) saturated aqueous sodium bicarbonate and (ii) multiple aliquots of deionized water. The mixture was then filtered, and dried of water via azeotropic distillation. A solution of 431.6 gram was recovered. It contained a composition having a structure corresponding to the formula M^{H}_{0.4}T^{Me}_{0.5}T^{Ph}_{0.1}, wherein M^{H} denotes H(CH₃)₂SiO_{1/2}, T^{Me} denotes CH₃SiO_{3/2}, and T^{Ph} denotes C₆H₅SiO_{3/2}.

### Example A2 - Preparation of Carbinol Functional Silicone Resin

431.6 gram of the SiH functional silicone resin intermediate A prepared in Example A1 was heated to 70-95 °C. 0.9 gram of 1 percent by weight platinum on Al₂O₃ hydrosilylation catalyst was added, followed by the addition of 209.1 gram of allyl alcohol. The mixture was heated at 70-110 °C until the SiH was consumed. This was determined by following the disappearance of the SiH peak in the FTIR spectrum that typically occurs about 2165 cm⁻¹. 0.04 gram of triphenylphosphine and 0.75 gram of carbon black were added. The product mixture was filtered, and the solvent was removed. 260.5 gram of a carbinol functional silicone resin was recovered having a composition as determined by ²⁹Si NMR to be M^{PrOH}_{0.361}T^{Me}_{0.517}T^{Ph}_{0.101} where M^{PrOH} denotes (HO(CH₂)₃(CH₃)₂SiO_{1/2}, T^{Ph} denotes C₆H₅SiO_{3/2}, and T^{Me} denotes CH₃SiO_{3/2}.

### Example B1 - Preparation of SiH Functional Silicone Resin Intermediate B

Methyltrimethoxysilane CH₃Si(OCH₃)₃ (4,958.4 gram) was hydrolyzed with deionized water (252.3 gram) in the presence of trifluoromethane sulfonic acid (4.93 gram). 1,1,3,3-tetramethyl-1,3-disiloxane (TMDS) (5,456.4 gram) and additional deionized water (725.8 gram) were added. The volatile content was removed by distillation, and then the product mixture was dissolved in hexane (2,210 gram). The product solution was washed with saturated aqueous sodium bicarbonate, and multiple aliquots of deionized water. It was then dried over magnesium sulfate, filtered, and any remaining solvent was removed. The product had a ²⁹Si NMR determined composition of M^{H}_{0.54}D^{Me2}_{0.03}T^{Me}_{0.43} where M^{H} is H(CH₃)₂SiO_{1/2}, D^{Me}₂ is (CH₃)₂SiO_{2/2}, and T^{Me} is CH₃SiO_{3/2}.

### Example B2 (Reference Example) - Reparation of Anhydride Functional Silicone Resin 2

A mixture of 2-methyl-3-butyn-2-ol (200.35 gram) and 0.51 gram of a toluene solution containing 0.481 percent by weight of platinum as a divinyltetramethyldisiloxane complex was heated to 95 °C. 200.17 gram of the SiH functional silicone resin intermediate B of Example B1 was dissolved in xylene (86.04 gram), and added to the solution drop wise. After heating the mixture at 90-100°C for 8.5 hours, the solvent was removed under vacuum. The product was dissolved in xylene (300.0 gram), and potassium hydrogen sulfate (4.01 gram) added. The mixture was heated to remove water as an azeotrope, by holding the reflux temperature for eighteen hours. Maleic anhydride (313.1 gram) was added, and the mixture was heated to reflux for 48 hours. The solvent was removed under vacuum. The product was re-dissolved in toluene (491.4 gram) and filtered. The toluene was stripped yielding 415.5 gram of a viscous amber liquid. The liquid product had a ²⁹Si NMR spectrum containing major peaks centered at chemical shifts (relative to 0 ppm for tetramethylsilane) of 7 ppm (0.21 mol fraction, M^{R}), -20 ppm (0.29 mol fraction (CH₃)₂SiO_{2/2}), and -66 ppm (0.40 mol fraction, (CH₃SiO_{3/2}). The unit M^{R} was tetrahydrophthalic anhydride, shown in more detail below.

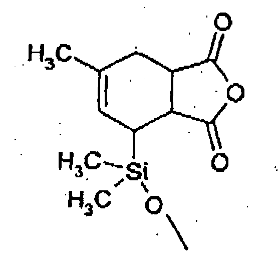

### Example 1 - Carbinol Functional Silicone Resin/Glycidyl Ether Epoxide Resin Pellet

5.1 gram of the solid carbinol functional siloxane resin prepared in Example A2, was heated in a laboratory oven to 160 °C in a glass vial to provide a flowable liquid. The liquid was transferred to a 100 °C oven. 1.3 gram of D.E.R® 331 glycidyl ether epoxide resin was preconditioned to 100 °C, and added to the carbinol functional silicone resin. The mixture was mixed aggressively with a wooden spatula. The mixture was poured immediately into a 3-millimeter diameter cylindrical polypropylene mold, and cooled in a freezer in order to solidify it rapidly. A razor blade was used to slit open the polypropylene mold, the carbinol functional silicone resin/glycidyl ether epoxide resin rod was released, and then the rod was cut into 5-millimeter long pellets.

One pellet was placed between two 8-millimeter parallel plates. The plates were heated to 70 °C to allow the material to be squeezed between the two plates and trimmed on a Rheometrics RDA2 rheometer. The material was cooled to room temperature before measuring its viscosity as a function of temperature in order to evaluate its melt and cure properties. The melt and cure properties were determined by means of a melt and cure profile for a composition containing the carbinol functional silicone resin and the D.E.R.® 331 Epoxy Resin. The melt and cure profile showed that the solid pellet had softened to a liquid having a viscosity of about 2 Pa.s before the cure reaction had begun, and that it had irreversibly crosslinked the composition at a temperature above 120 °C. This type of melt and cure profile is typical for materials used in transfer molding applications in the electronics industry.

### Example 2 - Carbinol Silicone Resin/Glycidyl Ether Epoxide Resin Thin Film Adhesive

Three of the pellets prepared in Example 1 were placed in a 2" x 3" 40-mil thick Teflon® lined steel chase mold, and placed in a Carver hot press under 10,000 pounds of pressure at 135 °C for 2 minutes. After removing the mold from the press, a laminate of 40-mil thick carbinol functional silicone resin/glycidyl ether epoxide resin material was sandwiched between two Teflon® release sheets. A 0.5-inch strip was cut from the laminate, and the release liner was removed from one side to expose the adhesive material.

The adhesive material was pressed onto a steel panel, and the other side of the release liner was removed successfully. This transferred the adhesive film to the steel panel. A small 0.5-ounce glass vial was heated in an oven to 110 °C, and the bottom of the hot vial was pressed onto the adhesive film. It formed a good bond to the vial bottom and was completely wetted. The bond was cured at 150 °C overnight in order to completely cure the composition. It formed a good structural bond with the vial. This example demonstrates that the composition is suitable for use as a thin film adhesive for electronics applications, especially in applications where hot chips are adhered to metallic substrates.

### Example 3 (Reference Example) - Anhydride Functional Silicone Resin/Glycidyl Ether Epoxide Resin Thin Film Adhesive Without a Thermal Calalyst

The anhydride functional silicone resin prepared in Example B2, and a multifunctional epoxy resin 1,1,1-tris-(p-Hydroxyphenyl)ethane Glycidyl Eether (THPE-GE) from CVC Specialty Chemicals, Incorporated, Maple Shade, New Jersey, were warmed in an oven at 80 °C to render them readily flowable liquids. Two parts of the anhydride functional silicone resin were mixed with one part of the epoxy resin, and the mixture was poured in a 2" x 3", 40-mil thick Teflon® lined steel chase mold, and placed in a Carver hot press under 10,000 pounds of pressure, at 100 °C for two minutes. After removing the mold from the press, a laminate of 40-mil thick anhydride functional silicone resin/glycidyl ether epoxide resin material was sandwiched between two Teflon® release sheets. A 0.5-inch strip was cut from the laminate, and the release liner was removed from one side to expose the adhesive material.

The adhesive material was pressed onto a clean, 4 inch silicon wafer, and the other side of the release liner was removed successfully. This transferred the adhesive film to the silicon wafer. A small 0.5-ounce glass vial was heated in an oven to 85 °C, and the bottom of the hot vial was pressed onto the adhesive film. It formed a good bond to the vial bottom and was completely wetted The bond was cured at 150°C for one hour followed by 200°C for one hour to completely cure the composition and then cooled slowly to room temperature. The thin film adhesive formed a good structural bond between the silicon wafer and the vial. This example demonstrates that the composition is suitable for use as a thin film adhesive for electronics applications, especially in applications where chips are adhered to metallic substrates at elevated temperatures.

### Example 4 (Reference Example) - Anhydride Functional Silicone Resin/Glycidyl Ether Epoxide Resin Thin Film Adhesive With an Imidazole Thermal Catalyst

A thin film adhesive transfer film was prepared in the same way as described in Example 3, except that one drop of a 25 percent ethanol solution of 2-ethyl-4-methyl imidazole was added to the mixture, prior to pressing,between the Teflon films at 60 °C. A 0.5-inch strip was cut from the laminate, and the release liner was removed from one side to expose the adhesive material. The adhesive material was pressed onto a clean, 4 inch silicon wafer, and the other side of the release liner was removed successfully. This transferred the adhesive film to the silicon wafer. A small 0.5-ounce glass vial was heated in an oven to 85 °C, and the bottom of the hot vial was pressed onto the adhesive film. It formed a good bond to the vial bottom and was completely wetted. The bond was cured at 150 °C for one hour to completely cure the composition and then cooled slowly to room temperature. The thin film adhesive formed a good structural bond with the vial. This example demonstrates that the composition is suitable for use as a thin film adhesive, and that the cure can be accelerated by the use of an imidazole or similar catalyst.

Some benefits of the composition are that it is a solid at ambient and storage temperatures. This provides for easy handling and positioning. It is also melt flowable at temperatures less than 150 °C prior to cure. This results in the composition being moldable and capable of making good contact with substrates when applied as an adhesive.

Other variations may be made in compounds, compositions, and methods described herein without departing from the essential features of the invention. The embodiments of the invention specifically illustrated herein are exemplary only, and not intended as limitations on their scope except as defined in the appended claims.

## Claims

1. A thermal curable composition comprising:
(a) 100 parts by weight of a glycidyl ether epoxide resin;
(b) 50-300 parts by weight of a carbinol functional silicone resin; and optionally
(c) 0-10 parts by weight of a thermal catalyst.

2. A thermal curable composition comprising:
(a) 100 parts by weight of a glycidyl ether epoxide resin or its hydrogenated forms;
(b) 50-300 parts by weight of a carbinol functional silicone resin; and
(c) 0.01 - 10 parts by weight of a thermal catalyst.

3. A composition according to Claim 1 or 2 wherein the carbinol functional silicone resin has a carbinol equivalent weight of 100-1000, and contains the units:
(R¹₃SiO_{1/2})ₐ
(R²₂SiO_{2/2})_{b}
(R³SiO_{3/2})_{c}
and
(SiO_{4/2})_{d},
wherein R¹ and R² are each independently a hydrogen atom, an alkyl group having 1-8 carbon atoms, an aryl group, a carbinol group free of aryl groups having at least 3 carbon atoms, or an aryl-containing carbinol group having at least 6 carbon atoms; R³ is an alkyl group having 1-8 carbon atoms or an aryl group; a has a value of less than or equal to 0.5; b has a value of less than or equal to 0.3, c has a value of 0.3-0.8; d has a value of less than 0.5; and the value of a + b + c + d = 1; there being on average, at least one carbinol group per carbinol functional silicone resin molecule; and greater than 10 percent by weight of the R¹+R²+R³ groups are phenyl groups; with the further proviso that the composition is a solid at ambient and storage temperatures, and that it is melt flowable at temperatures of less than 150 °C.

4. A composition according to any of Claims 1-3 in which the carbinol functional silicone resin contains units selected from the group consisting of:
I. the units:
((CH₃)₃SiO_{1/2})ₐ
((R²)CH₃SiO_{2/2})_{b} where R² is -(CH₂)₃C₆H₄OH
((C₆H₅)CH₃SiO_{2/2})_{b}
and
(C₆H₅SiO_{3/2})_{c},
II. the units:
((R¹)(CH₃)₂SiO_{1/2})ₐ where R¹ is -(CH₂)₃C₆H₄OH
and
(C₆H₅SiO_{3/2})_{c},
III. the units:
((R¹)(CH₃)₂SiO_{1/2})ₐ where R¹ is -(CH₂)₃OH
and
(C₆H₅SiO_{3/2})_{c},
IV. the units:
((R¹)(CH₃)₂SiO_{1/2})ₐ where R¹ is -(CH₂)₃OH
(CH₃SiO_{3/2})_{c}
and
(C₆H₅SiO_{3/2})_{c},
V. the units:
((CH₃)₃SiO_{1/2})ₐ
((R²)CH₃SiO_{2/2})_{b} where R² is -(CH₂)₃OH
((C₆H₅)CH₃SiO_{2/2})_{b}
and
(C₆H₅SiO_{3/2})_{c},
VI. the units:
((CH₃)₃SiO_{1/2})ₐ
((R¹)(CH₃)₂SiO_{1/2})ₐ where R² is -(CH₂)₃OH and
(C₆H₅SiO_{3/2})_{c},
and
VII. the units:
((R¹)(CH₃)₂SiO_{1/2})ₐ where R² is -CH₂CH(CH₃)CH₂OH
((H)(CH₃)₂SiO_{1/2})ₐ
and
(C₆H₅SiO_{3/2})_{c.}
where a has a total value in the resin of 0.2-0.4; b has a total value in the resin of zero to 0.3; and c has a total value in the resin of 0.3-0.8.

5. A composition according to any of Claims 1-4 in which the epoxide resin (a) is selected from the group consisting of diglycidyl ethers of bisphenol A derived from reacting bisphenol A with epichlorohydrin; glycidyl ethers of bisphenol A derived from reacting bisphenol A with an alcohol and epichlorohydrin; aryl glycidyl ether epoxide resins; polynuclear phenol glycidyl ether epoxide resins; aryl glycidyl ether epoxide resins; di-nuclear aryl glycidyl ether epoxide resins; multi-nuclear aryl glycidyl ether epoxide resins; cresol-novolac glycidyl ether epoxide resins; and phenol-novolac glycidyl ether epoxide resins.

6. A composition according to any of Claims 1-5 in which the catalyst (c) is selected from the group consisting of (i) aliphatic and aromatic tertiary amines; (ii) amine salts; (iii) boron trifluoride complexes; (iv) amine borates; (v) boron trifluoride; (vi) imidazoles; (vii) Lewis acids and Lewis acid complexes; (viii) hydrazides; and (ix) guanidines.

7. A composition according to any of Claims 1-6 further comprising (d) 0.1-200 parts by weight of an organic polyol, an organic anhydride, or a mixture thereof.

8. A composition according to any of Claims 1-7 further comprising (d) 0.1-200 parts by weight of an organic polyol selected from the group consisting ofpolyhydroxyalkane polyols, polyoxyalkylene, polyols, acrylic polyols, vinyl polyols, polyester polyols, and polycaprolactone polyols; or (d) 0.1-200 parts by weight of an organic anhydride selected from the group consisting of maleic anhydride, succinic anhydride, hexahydrophthalic anhydride, tetrahydrophthalic anhydride, dodecylsuccinic anhydride, phthalic anhydride, nadic methyl anhydride, pyromellitic dianhydride, and mixtures thereof.

9. A composition according to any of Claims 1-8 further comprising (e) 0.1-80 parts by weight of a filler selected from the group consisting of metal carbonates; silica; silicates; gypsum; vermiculite; wood pulp; aluminum trihydrate; metal oxides; and metal sulfites.

10. A composition according to any of Claims 1-9 wherein the ratio of carbinol groups to epoxide groups is 0.5 to 1.2.

11. A method of adhering an article to a substrate comprising heating the article, applying to at least one surface of the substrate, the composition according to any of Claims 1-10, placing the heated article in contact with the composition, and curing the composition.

12. A method of encapsulating an article comprising transfer molding the composition according to any of Claims 1-10 onto an article, by exposing the article to heat, causing the composition to flow and cure.

## Patentansprüche

1. Eine thermisch härtbare Zusammensetzung, enthaltend:
(a) 100 Gewichtsteile eines Glycidyletherepoxidharzes;
(b) 50 bis 300 Gewichtsteile eines carbinolfunktionellen Siliconharzes und optional
(c) 0 bis 10 Gewichtsteile eines thermischen Katalysators.

2. Eine thermisch härtbare Zusammensetzung, enthaltend:
(a) 100 Gewichtsteile eines Glycidyletherepoxidharzes oder dessen hydrierte Formen;
(b) 50 bis 300 Gewichtsteile eines carbinolfunktionellen Siliconharzes und
(c) 0,01 bis 10 Gewichtsteile eines thermischen Katalysators.

3. Eine Zusammensetzung gemäß Anspruch 1 oder 2, wobei das carbinolfunktionelle Siliconharz ein Carbinoläquivalentgewicht von 100 bis 1000 hat und die Einheiten:
(R¹₃SiO_{1/2})ₐ
(R²₂SiO_{2/2})_{b}
(R³SiO_{3/2})_{c}
und
(SiO_{4/2})_{d}
enthält, wobei R¹ und R² jeweils unabhängig voneinander ein Wasserstoffatom, eine Alkylgruppe mit 1 bis 8 Kohlenstoffatomen, eine Arylgruppe, eine Carbinolgruppe, die frei von Arylgruppen ist und wenigstens 3 Kohlenstoffatome enthält, oder eine arylhaltige Carbinolgruppe mit wenigstens 6 Kohlenstoffatomen sind; R³ eine Alkylgruppe mit 1 bis 8 Kohlenstoffatomen oder eine Arylgruppe ist; a einen Wert von kleiner als oder gleich 0,5 hat; b einen Wert von kleiner als oder gleich 0,3 hat; c einen Wert von 0,3 bis 0,8 hat; d einen Wert von kleiner als 0,5 hat; und der Wert von a + b + c + d = 1 ist; wobei im Mittel wenigstens eine Carbinolgruppe pro carbinolfunktionellem Siliconharzmolekül vorliegt und mehr als 10 Gew.-% der R¹+R²+R³-Gruppen Phenylgruppen sind; unter der weiteren Voraussetzung, dass die Zusammensetzung bei Umgebungs- und Lagerungstemperaturen ein Feststoff ist und dass sie bei Temperaturen von weniger als 150°C schmelzfließfähig ist.

4. Eine Zusammensetzung gemäß einem der Ansprüche 1 bis 3, wobei das carbinolfunktionelle Siliconharz Einheiten enthält, die ausgewählt sind aus der Gruppe, bestehend aus:
I. den Einheiten:
((CH₃)₃SiO_{1/2})ₐ
((R²)CH₃SiO_{2/2})_{b}, wobei R² gleich -(CH₂)₃C₆H₄OH ist,
((C₆H₅)CH₃SiO_{2/2})_{b}
und
(C₆H₅SiO_{3/2})_{c},
II. den Einheiten:
((R¹)(CH₃)₂SiO_{1/2})ₐ, wobei R¹ gleich -(CH₂)₃C₆H₄OH ist,
und
(C₆H₅SiO_{3/2})_{c},
III. den Einheiten:
((R¹)(CH₃)₂SiO_{1/2})ₐ, wobei R¹ gleich -(CH₂)₃OH ist,
und
(C₆H₅SiO_{3/2})_{c},
IV. den Einheiten:
((R¹)(CH₃)₂SiO_{1/2})ₐ, wobei R¹gleich -(CH₂)₃OH ist,
(CH₃SiO_{3/2})_{c}
und
(C₆H₅SiO_{3/2})_{c},
V. den Einheiten:
((CH₃)₃SiO_{1/2})ₐ
((R²)CH₃SiO_{2/2})_{b}, wobei R² gleich -(CH₂)₃OH ist,
((C₆H₅)CH₃SiO_{2/2})_{b}
und
(C₆H₅SiO_{3/2})_{c},
VI. den Einheiten:
((CH₃)₃SiO_{1/2})ₐ
((R¹)(CH₃)₂SiO_{1/2})ₐ, wobei R² gleich -(CH₂)₃OH ist, und
(C₆H₅SiO_{3/2})_{c},
und
VII. den Einheiten:
((R¹)(CH₃)₂SiO_{1/2})ₐ, wobei R² gleich -CH₂CH(CH₃)CH₂OH ist,
((H)(CH₃)₂SiO_{1/2})ₐ
und
(C₆H₅SiO_{3/2})_{c},
wobei a einen Gesamtwert im Harz von 0,2 bis 0,4 hat; b einen Gesamtwert im Harz von 0 bis 0,3 hat und c einen Gesamtwert im Harz von 0,3 bis 0,8 hat.

5. Eine Zusammensetzung gemäß einem der Ansprüche 1 bis 4, in der das Epoxidharz (a) ausgewählt ist aus der Gruppe, bestehend aus Diglycidylethern von Bisphenol A, die aus der Reaktion von Bisphenol A mit Epichlorhydrin stammen; Glycidylethern von Bisphenol A, die aus der Reaktion von Bisphenol A mit einem Alkohol und Epichlorhydrin stammen; Arylglycidyletherepoxidharzen; mehrkernigen Phenolglycidyletherepoxidharzen; Arylglycidyletherepoxidharzen; zweikernigen Arylglycidyletherepoxidharzen; mehrkernigen Arylglycidyletherepoxidharzen; Kresol-Novolak-Glycidyletherepoxidharzen und Phenol-Novolak-Glycidyletherepoxidharzen.

6. Eine Zusammensetzung gemäß einem der Ansprüche 1 bis 5, in der der Katalysator (c) ausgewählt ist aus der Gruppe, bestehend aus (i) aliphatischen und aromatischen tertiären Aminen; (ii) Aminsalzen; (iii) Bortrifluoridkomplexen, (iv) Aminboraten; (v) Bortrifluorid; (vi) Imidazolen; (vii) Lewis-Säuren und Lewis-Säure-Komplexen; (viii) Hydraziden und (ix) Guanidinen.

7. Eine Zusammensetzung gemäß einem der Ansprüche 1 bis 6, außerdem enthaltend (d) 0,1 bis 200 Gewichtsteile eines organischen Polyols, eines organischen Anhydrids oder einer Mischung davon.

8. Eine Zusammensetzung gemäß einem der Ansprüche 1 bis 7, außerdem enthaltend (d) 0,1 bis 200 Gewichtsteile eines organischen Polyols, ausgewählt aus der Gruppe, bestehend aus Polyhydroxyalkanpolyolen, Polyoxyalkylenpolyolen, Acrylpolymerpolyolen, Vinylpolymerpolyolen, Polyesterpolyolen und Polycaprolactonpolyolen; oder (d) 0,1 bis 200 Gewichtsteile eines organischen Anhydrids, ausgewählt aus der Gruppe, bestehend aus Maleinsäureanhydrid, Bernsteinsäureanhydrid, Hexahydrophthalsäureanhydrid, Tetrahydrophthalsäureanhydrid, Dodecylbernsteinsäureanhydrid, Phthalsäureanhydrid, Methylnorbornendicarbonsäureanhydrid, Pyromellithsäuredianhydrid und Mischungen davon.

9. Eine Zusammensetzung gemäß einem der Ansprüche 1 bis 8, außerdem enthaltend (e) 0,1 bis 80 Gewichtsteile eines Füllstoffes ausgewählt aus der Gruppe, bestehend aus Metallcarbonaten, Sliciumdioxid; Silicaten, Gips; Vermiculit; Holzzellstoff, Aluminiumtrihydrat; Metalloxiden und Metallsulfiten.

10. Eine Zusammensetzung gemäß einem der Ansprüche 1 bis 9, wobei das Verhältnis von Carbinolgruppen zu Epoxidgruppen 0,5 bis 1,2 ist.

11. Ein Verfahren zum Anbringen eines Gegenstands an ein Substrat, umfassend das Erwärmen des Gegenstands, Aufbringen der Zusammensetzung gemäß einem der Ansprüche 1 bis 10 auf wenigstens eine Oberfläche des Substrats, In-Kontakt-Bringen des erhitzten Gegenstands mit der Zusammensetzung und Härten der Zusammensetzung.

12. Ein Verfahren zum Umschließen eines Gegenstands, umfassend das Transferformen der Zusammensetzung gemäß einem der Ansprüche 1 bis 10 auf einen Gegenstand durch Aussetzen des Gegenstands gegenüber Hitze, wodurch das Fließen und Härten der Zusammensetzung bewirkt wird.

## Revendications

1. Composition thermodurcissable comprenant :
(a) 100 parties en poids d'une résine époxyde de glycidyléther ;
(b) 50 à 300 parties en poids d'une résine de silicone à fonctionnalité carbinol ; et facultativement
(c) 0 à 10 parties en poids d'un catalyseur thermique.

2. Composition thermodurcissable comprenant :
(a) 100 parties en poids d'une résine époxyde de glycidyléther ou ses formes hydrogénées ;
(b) 50 à 300 parties en poids d'une résine de silicone à fonctionnalité carbinol ; et
(c) 0,01 à 10 parties en poids d'un catalyseur thermique.

3. Composition selon la revendication 1 ou 2, dans laquelle la résine de silicone à fonctionnalité carbinol a un poids équivalent de carbinol de 100 à 1 000, et contient des motifs :
(R¹₃SiO_{1/2})ₐ
(R²₂SiO_{2/2})_{b}
(R³SiO_{3/2})_{c}
et
(SiO_{4/2})_{d},
dans lesquels R¹ et R² sont chacun indépendamment un atome d'hydrogène, un groupe alkyle ayant 1 à 8 atomes de carbone, un groupe aryle, un groupe carbinol exempt de groupes aryles ayant au moins 3 atomes de carbone, ou un groupe carbinol contenant un groupe aryle ayant au moins 6 atomes de carbone ; R³ est un groupe alkyle ayant 1 à 8 atomes de carbone ou un groupe aryle ; a a une valeur inférieure ou égale à 0,5 ; b a une valeur inférieure ou égale à 0,3, c a une valeur de 0,3 à 0,8 ; d a une valeur inférieure à 0,5 ; et la valeur de a + b + c + d = 1 ; comprenant en moyenne au moins un groupe carbinol par molécule de résine de silicone à fonctionnalité carbinol ; et plus de 10 pour cent en poids des groupes R¹ + R² + R³ sont des groupes phényle ; à condition que la composition soit solide aux températures ambiantes et de stockage, et qu'elle soit fluide par fusion à des températures inférieures à 150 °C.

4. Composition selon l'une quelconque des revendications 1 à 3, dans laquelle la résine de silicone à fonctionnalité carbinol contient des motifs choisis dans le groupe constitué par :
I. les motifs :
((CH₃)₃SiO_{1/2})ₐ
((R²)CH₃SiO_{2/2})_{b} où R² est -(CH₂)₃C₆H₄OH
((C₆H₅)CH₃SiO_{2/2})_{b}
et
(C₆H₅SiO_{3/2})_{c},
II. les motifs :
((R¹)(CH₃)₂SiO_{1/2})ₐ où R¹ est -(CH₂)₃C₆H₄OH
et
(C₆H₅SiO_{3/2})_{c},
III. les motifs :
((R¹)(CH₃)₂SiO_{1/2})ₐ où R¹ est -(CH₂)₃OH
et
(C₆H₅SiO_{3/2})_{c},
IV. les motifs :
((R¹)(CH₃)₂SiO_{1/2})ₐ où R¹ est -(CH₂)₃OH
(CH₃)SiO_{3/2})_{c}
et
(C₆H₅SiO_{3/2})_{c},
V. les motifs :
((CH₃)₃SiO_{1/2})ₐ
((R²)CH₃SiO_{2/2})_{b} où R² est -(CH₂)₃OH
((C₆H₅)CH₃SiO_{2/2})_{b}
et
(C₆H₅SiO_{3/2})_{c},
VI. les motifs :
((CH₃)₃SiO_{1/2})ₐ
((R¹)(CH₃)₂S₁O_{1/2})ₐ où R² est -(CH₂)₃OH
et
(C₆H₅SiO_{3/2})_{c},
et
VII. les motifs :
((R¹)(CH₃)₂SiO_{1/2})ₐ où R² est -CH₂CH(CH₃)CH₂OH
((H)(CH₃)₂SiO_{1/2})ₐ
et
(C₆H₅SiO_{3/2})_{c},
où a a une valeur totale dans la résine de 0,2 à 0,4 ; b a une valeur totale dans la résine de zéro à 0,3 ; et c a une valeur totale dans la résine de 0,3 à 0,8.

5. Composition selon l'une quelconque des revendications 1 à 4, dans laquelle la résine époxyde (a) est choisi dans le groupe constitué par les diglycidyléthers de bisphénol A dérivés de la réaction du bisphénol A avec de l'épichlorhydrine ; les glycidyléthers de bisphénol A dérivés de la réaction de bisphénol A avec un alcool et de l'épichlorhydrine ; les résines époxyde d'arylglycidyléther ; les résines époxyde de phénolglycidyléther polynucléaires ; les résines époxyde d'arylglycidyléther ; les résines époxyde d'arylglycidyléther dinucléaires ; les résines époxyde d'arylglycidyléther multinucléaires ; les résines époxyde de crésol-novolaque glycidyléther ; et les résines époxyde de phénol-novolaque glycidyléther.

6. Composition selon l'une quelconque des revendications 1 à 5, dans laquelle le catalyseur (c) est choisi dans le groupe constitué par (i) les amines tertiaires aliphatiques et aromatiques ; (ii) les sels d'amine ; (iii) les complexes de trifluorure de bore ; (iv) les borates d'amine ; (v) le trifluorure de bore ; (vi) les imidazoles ; (vii) les acides de Lewis et les complexes d'acide de Lewis ; (viii) les hydrazides ; et (ix) les guanidines.

7. Composition selon l'une quelconque des revendications 1 à 6, comprenant en outre (d) 0,1 à 200 parties en poids d'un polyol organique, d'un anhydride organique ou d'un mélange de ceux-ci.

8. Composition selon l'une quelconque des revendications 1 à 7, comprenant en outre (d) 0,1 à 200 parties en poids d'un polyol organique choisi dans le groupe constitué par les polyols de poly(hydroxyalcane), les polyols de poly(oxyalkylène), les polyols acryliques, les polyols vinyliques, les polyols de polyester et les polyols de polycaprolactone ; ou (d) 0,1 à 200 parties en poids d'un anhydride organique choisi dans le groupe constitué par l'anhydride maléique, l'anhydride succinique, l'anhydride hexahydrophtalique, l'anhydride tétrahydrophtalique, l'anhydride dodécylsuccinique, l'anhydride phtalique, l'anhydride méthylnadique, le dianhydride pyromellitique et des mélanges de ceux-ci.

9. Composition selon l'une quelconque des revendications 1 à 8, comprenant en outre (e) 0,1 à 80 parties en poids d'une charge choisie dans le groupe constitué par les carbonates de métal ; la silice ; les silicates ; le gypse ; la vermiculite ; la pâte de bois ; le trihydrate d'aluminium ; les oxydes de métal ; et les sulfites de métal.

10. Composition selon l'une quelconque des revendications 1 à 9, dans laquelle le rapport des groupes carbinol aux groupes époxyde va de 0,5 à 1,2.

11. Procédé d'adhérence d'un article à un substrat comprenant le chauffage de l'article, l'application à au moins une surface du substrat, de la composition selon l'une quelconque des revendications 1 à 10, le placement de l'article chauffé en contact avec la composition et le durcissement de la composition.

12. Procédé d'encapsulation d'un article comprenant le moulage par transfert de la composition selon l'une quelconque des revendications 1 à 10 sur un article, par l'exposition de l'article à la chaleur, entraînant l'écoulement et le durcissement de la composition.
